# EUROPEAN PATENT SPECIFICATION

(11) **EP 1 249 266 B1**
(45) Date of publication and mention of the grant of the patent: **12.05.2010**
(21) Application number: 02009354.8
(22) Date of filing: 21.04.1997
(51) Int. Cl.: B01D 53/94, B01J 29/06, B01J 23/10, B01J 23/63

(54) **Exhaust gas emission control catalyst**
Katalysator zur Regelung der Abgasemission
Catalyseur pour contrôler l'émission de gaz d'échappement

(30) Priority: 19.04.1996 JP 9828896
(43) Date of publication of application: 16.10.2002
(62) Divisional of application: 97302700.6
(73) Proprietor: HONDA GIKEN KOGYO KABUSHIKI KAISHA, Minato-ku, Tokyo (JP)
(72) Inventor: Terada, Kazuhide Kabushiki Kaisha Honda, Saitama (JP); Nakanishi, Yoshiyuki Kabushiki Kaisha Honda, Saitama (JP); Narishige, Takeshi Kabushiki Kaisha Honda, Saitama (JP); Fukuda, Kaoru Kabushiki Kaisha Honda, Saitama (JP)
(74) Representative: Calamita, Roberto

(56) References cited:
- EP-A- 0 462 598
- EP-A- 0 489 433
- EP-A- 0 513 469
- EP-A- 0 613 714
- EP-A- 0 645 185
- EP-A- 0 671 208
- EP-A1- 0 485 180
- JP-A- 8 131 838
- US-A- 4 849 398
- US-A- 5 480 622

## Description

The present invention relates to an exhaust emission control catalyst.

Japanese Patent Application Laid-open No. 8-131838 discloses an exhaust emission control catalyst that includes a crystalline aluminosilicate with a catalytic metal carried thereon, namely, a zeolite with Pt carried thereon, and CeO₂. The present inventors have made various examinations of that catalyst and, as a result, found that if that catalyst is exposed to a high-temperature environment including oxygen and water vapor, namely, a hydrothermal environment, there is a tendency for it to deteriorate, resulting in a reduced NOₓ (nitrogen oxides) converting ability in an excessive-oxygen atmosphere.

EP-A-645185 describes a fine granular ZSM-5 zeolite which includes catalytic elements within a ceramic carrier.

EP-A-485180 describes a catalyst composition for purification of exhaust gas comprising (a) high-silica zeolite having a Si/Al ratio of 40 or more, subjected to ion exchange with at least one metal selected from Pt, Pd, Rh, Ir and Ru, and (b) a heat-resistant oxide containing at least one metal from Pt, Pd, Rh, Ir and Ru.

It is an object of the present invention to provide an exhaust emission control catalyst of the above-described type, wherein the catalyst is further developed and even after it is exposed to a hydrothermal environment as described above, the NOₓ converting ability can be maintained at a high level.

To achieve the above object, according to the present invention, there is provided an exhaust emission control catalyst comprising, for use with a lean-burn engine, comprising a crystalline aluminosilicate with a catalytic metal carried thereon, and CeO₂, **characterised in that** said CeO₂ is formed of grains of crystallites, said crystallites having an average diameter of less than 500Å, said crystalline aluminosilicate is a ZSM-5 zeolite which has undergone a dealuminization and which has a SiO₂/Al₂O₃ molar ratio of 25-800 after said dealuminization, and at least one of Mg, Ca, Sr and Ba has been impregnated on said crystalline aluminosilicate by an ion exchange process so as to inhibit the removal of aluminium from said crystalline aluminosilicate in a hydrothermal environment.

With the above feature, the catalytic metal exhibits an oxidizing ability and a reducing ability to an exhaust gas. The oxidizing ability of the catalytic metal contributes to an oxidizing reaction represented by HC (hydrocarbon) + O₂ → H₂O + O₂ and CO + O₂ → CO₂. The reducing ability of the catalytic metal contributes to a reducing reaction represented by NOₓ + CO → N₂ + CO₂ and NOₓ + HC → N₂ + CO₂ + H₂O by adsorbing NOₓ at a theoretically ideal air-fuel ratio (stoichiometric). On the other hand, the reducing ability of the catalytic metal contributes to an oxidizing reaction represented by NOₓ + O₂ → NO₂ and a reducing reaction represented by NO₂ + HC + O₂ → H₂O in the excessive-oxygen atmosphere.

The crystalline aluminosilicate has a function to adsorb HC in an exhaust gas to concentrate it and to supply such HC to the catalytic metal. Thus, it is possible to enhance the NOₓ conversion rate in the excessive-oxygen atmosphere.

The CeO₂ exhibits an NOₓ adsorbing ability in the excessive-oxygen atmosphere and hence, the concentration of NOₓ in the vicinity of the catalytic metal is increased. This also makes it possible to enhance the NOₓ conversion rate in the excessive-oxygen atmosphere.

Among the various metal elements, each of Mg, Ca, Sr and Ba has an effect of inhibiting the removal of aluminum from a skeleton structure of the crystalline aluminosilicate in a hydrothermal environment as described above. Thus, the heat resistance of the crystalline aluminosilicate is enhanced, and even after the catalyst is exposed to the hydrothermal environment, the crystalline aluminosilicate can satisfactorily exhibit the above-described function in the excessive-oxygen atmosphere.

In addition, at least one of La and Ba may be included in said CeO₂. The CeO₂ including La and/or Ba has a high NOₓ adsorbing ability in an excessive-oxygen atmosphere compared with .the CeO₂, not including La or the like and hence, it is possible to further enhance the NOₓ converting ability in such atmosphere. The same is true even after exposure of the catalyst to the hydrothermal environment.
Fig. 1 is an illustration for explaining CeO₂.
Fig. 2 is a graph illustrating the relationship between the proportion c1 of Mg by weight and the maximum NO conversion rate.
Fig. 3 is a graph illustrating a first example of the relationship between the catalysts as examples of this invention and comparative examples, and the maximum NO conversion rate.
Fig. 4 is a graph illustrating a fourth example of the relationship between the catalysts as examples of this invention and comparative examples, and the maximum NO conversion rate.

A first embodiment of an exhaust emission control catalyst of this invention includes a crystalline aluminosilicate having a catalytic metal carried thereon and CeO₂ as basic components.

At least one of the following metals is carried as a metal element Me on the zeolite: Mg, Ca, Sr, Ba. Platinum may be used as the catalytic metal.

The crystalline aluminosilicate is a ZSM-5 zeolite. This ZSM-5 zeolite is a modified ZSM-5 zeolite produced by subjecting the unmodified zeolite to a dealuminization.

The de-aluminization of the unmodified ZSM-5 zeolite which is utilized may be at least one of an acid treatment, a steaming treatment, and a boiled-water treatment.

The acid treatment may be a process which involves heating an HCl solution of 0.5 to 5 N to a temperature in a range of 70 to 90°C, placing the unmodified ZSM-5 zeolite in such HCl solution and agitating the solution containing the unmodified ZSM-5 zeolite for 1 to 20 hours.

The boiled-water treatment may be a process which involves subjecting the unmodified ZSM-5 zeolite to a hydrating treatment, rising the atmospheric temperature around the hydrated unmodified ZSM-5 zeolite to 550 to 600°C, and maintaining the unmodified ZSM-5 zeolite under such high-temperature atmosphere for 4 hours.

The steaming treatment may be a process which involves maintaining the unmodified ZSM-5 zeolite in an atmosphere including water of about 10 % and having a temperature in a range of 750 to 900°C for 10 to 20 hours.

The acid treatment, the boiled-water treatment and the steaming treatment may be utilized alone or in combination of two or more of them, and may be repeated, if required. In this manner, a modified ZSM-5 zeolite is produced and has a SiO₂/Al₂O₃ molar ratio in a range of 25 to 800.

In such a modified ZSM-5 zeolite, the crystallizability is enhanced by the de-aluminizing treatment, and the generation of the nucleus of a pyrolysis product is inhibited. Therefore, the heat-resistant temperature of the modified ZSM-5 zeolite is increased to about 100°C.

A ZSM-5 zeolite having Pt carried thereon is produced by allowing platinum (Pt) to be carried on a modified ZSM-5 zeolite by an ion exchanging process, an impregnating process or the like.

Platinum (Pt) which is a catalytic metal exhibits an oxidizing ability and a reducing ability to an exhaust gas.

The oxidizing ability of platinum contributes to an oxidizing reaction represented by HC (hydrocarbon) + O₂ → H₂O + O₂ and CO + O₂ → CO₂.

The reducing ability of platinum contributes to a reducing reaction represented by NO + CO → N₂ + CO₂ and NO + HC → N₂ + H₂O + CO₂ which is caused by adsorption of NO₂, e.g., NO in this embodiment at a theoretical air-fuel ratio, on the one hand, and contributes to an oxidizing reaction represented by NO + O₂ → NO₂ and a reducing reaction represented by NO₂ + HC + O₂ → N₂ + CO₂ + H₂O at an excessive-oxygen atmosphere, on the other hand.

The modified ZSM-5 zeolite has a hydrophobic nature enhanced by the de-aluminizing treatment and a basic skeleton structure possessed by the unmodified ZSM-5 zeolite, and moreover, has a specific surface area enlarged by the removal of aluminum. Therefore, the absorbing ability which is a characteristic of the modified ZSM-5 zeolite is promoted. Such modified ZSM-5 zeolite exhibits a good adsorbing ability to HC in an exhaust gas even in the presence of water to concentrate HC and also exhibits a function to supply the HC to platinum. Thus, it is possible to enhance the rate of purification of NO in the excexsive-oxygen atmosphere.

CeO₂ exhibits an NO adsorbing ability in the excessive-oxygen atmosphere and hence, the concentration of NO in the vicinity of platinum (Pt). This also makes it possible to enhance the rate of purification of NO in the excessive-oxygen atmosphere.

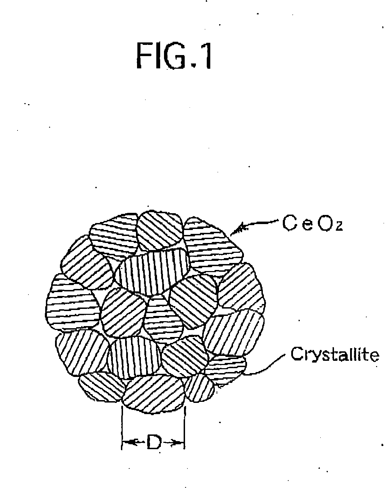

CeO₂ is formed of polycrystalline grains each of which is comprised of a plurality of crystallites congregated, as shown in Fig.1. To cause the CeO₂ to exhibit the above-described function, the average diameter D of the crystallites is set in a range of D < 500Å, preferably, in a range of D ≤ 320Å.

In producing CeO₂, any of various Ce salts such as Ce carbonate, Ce oxalate, Ce nitrate and the like is heated in the presence of oxygen. When pure CeO₂ free from any rare earth element is produced, CeO₂ produced after heating is washed with nitric acid.

The control of the average diameter D of the crystallites is performed by regulating the heating temperature in the producing course. For example, for CeO₂ having an average diameter D of crystallites equal to 78Å, Ce nitrate is heated at about 250°C for 5 hours. The average diameter D of the crystallites can be also controlled by subjecting the produced CeO₂ to a thermal treatment. For example, if the CeO₂ having the average diameter of 78Å is subjected to the thermal treatment at 700°C for 30 hours, CeO₂ having an average diameter D of 205Å is produced.

To calculate a diameter D₍ₕₖₗ₎ of crystallites, the Schuler equation, i.e., D₍ₕₖₗ₎ = 0.9λ/(β_{1/2} * cosθ) was used, wherein hkl is Miller index; λ is a wavelength (Å) of characteristic X-rays; β_{1/2} is a half-value width (radian) of a (hkl) face; and θ is an X-ray reflection angle. Therefore, in the CeO₂, a diameter D₍₁₁₁₎ of each of the crystallites was calculated by measuring the half-value width β_{1/2} of a (111) face from an X-ray diffraction pattern, and an average diameter D of the crystallites was determined from the diameters D₍₁₁₁₎ of the crystallises.

Each of the various metal elements Me is carried on a modified ZSM-5 zeolite having platinum carried thereon or having no platinum carried thereon by an ion exchanging process. Each of Mg, Ca, Sr and Ba as the metal elements Me has an effect of inhibiting the removal of aluminum from the skeleton structure of the modified ZSM-5 zeolite in a hydrothermal environment as described above. Thus, it is possible to enhance the heat resistance of the modified ZSM-5 zeolite, thereby causing the modified ASM-5 zeolite to sufficiently exhibit the above-described function in the excessive-oxygen atmosphere even after being exposed to the hydrothermal environment.

If the weight of Pt-Me carried modified ZSM-5 zeolite with Pt and a metal element Me carried thereon, which is incorporated in the catalyst, is represented by A, and the weight of CeO₂ incorporated in the catalyst is represented by B, the proportion A₁ [= {A/(A + B)} x 100] of the Pt-Me carried modified ZSM-5 zeolite by weight is set in a range of 19 % by weight < A₁ < 100 % by weight. If the weight of Pt-carried modified ZSM-5 zeolite incorporated is represented by a, and the weight of Pt is represented by b, the proportion b₁ {= (b/a) x 100} of Pt by weight is set in a range of 3.5 % by weight s b₁ ≤ 11 % by weight. Further, if the proportion of Pt-Me carried modified ZSM-5 zeolite incorporated is represented by A, and the weight of metal element Me incorporated is represented by c, the proportion c₁ (= (c/A) x 100) of the metal element by weight is set in a range of a minimum effective amount of the metal element to c₁ ≤ 10 % by weight. The upper limit value of this proportion c₁ is varied in principle depending upon the type of the metal element Me in the range of c₁ ≤ 10 % by weight.

However, if the proportion A₁ of the Pt-Me carried modified ZSM-5 zeolite by weight is in a range of A₁ ≤ 19 % by weight, the HC absorbing ability of the Pt-Me carried modified ZSM-5 zeolite is reduced and for this reason, the NO conversion rate is decreased. On the other hand, if A₁ = 100 %, the ability to adsorb NO by CeO₂ is not obtained and hence, the NO conversion rate is decreased. If the proportion b₁ of Pt by weight is lower than 3.5 % by weight, the amount of Pt carried is smaller and hence, the NO conversion rate is decreased. On the other hand, even if the proportion b₁ of Pt by weight is set in a range of b₁ > 11 % by weight, the NO conversion rate is varied only a little. Further, if the proportion c₁ of the metal element Me by weight is larger than 10 % by weight, pores in the surface of the ZSM-5 zeolite are occluded by the metal element Me, whereby the function of the zeolite is reduced, resulting in a decreased NO conversion rate of the catalyst.

In addition, at least one of La and Ba may be included in said CeO₂.

Pt is used as the catalytic metals as in the first embodiment, and a zeolite such as a modified ZSM-5 zeolite is used as the crystalline aluminosilicate, as in the first embodiment.

The CeO₂ including La and/or Ba as described above has a high NO adsorbing ability in an excessive-oxygen atmosphere, as compared with CeO₂ including no La or Ba and hence, the NO conversion rate in such atmosphere can be further enhanced. This is also true even after exposure to the hydrothermal environment.

The production of the Pt-carried modified ZSM-5 zeolite and CeO₂ is carried out in the same manner as in the first embodiment.

In producing the CeO₂ including La and/or Ba, namely, La-including CeO₂, Ba-including CeO₂ and La-Ba-including CeO₂, lanthanum nitrate is used as La, and barium nitrate is used as Ba. The steps of suspending CaO₂ into a solution of each of the lanthanum nitrate and the barium nitrate, agitating, drying and calcining the suspension are conducted in sequence.

If the weight of Pt-carried modified ZSM-5 zeolite incorporated in the catalyst is represented by E, and the weight of La-including CeO₂, Ba-including CeO₂ or La-Ba-including CeO₂ incorporated in the catalyst is represented by F, the proportion E₁ [= {E/(E + F) } x 100] of the Pt-carried modified ZSM-5 zeolite is set in a range of 19 % by weight < E₁ < 100 % by weight. If the weight of Pt-carried modified ZSM-5 zeolite incorporated is represented by a, and the weight of Pt incorporated is represented by b, the proportion b₁ {= (b/a) x 100} of Pt by weight is set in a range of 3.5 % by weight s b₁ ≤ 11 % by weight. Further, if the weight of La-including CeO₂, Ba-including CeO₂ or La-Ba-including CeO₂ incorporated is represented by d, and the weight of La, Ba or La + Ba incorporated is represented by e, the proportion e₁ {= (e/d) x 100} of La, Ba or both by weight is set in a range of 5 % by weight ≤ e₁ ≤ 25 % by weight.

However, if the proportion E₁ of the Pt-carried modified' ZSM-5 zeolite is equal to or smaller than 19 % by weight, the HC adsorbing ability of the Pt-carried modified ZSM-5 zeolite is reduced and for this reason, the NO conversion rate is decreased. On the other hand, if the proportion E₁ is equal to 100 %, the ability to adsorb NO by the La-including CeO₂ or the like is not obtained and hence, the NO conversion rate is decreased. If the proportion b₁ of Pt is smaller than 3.5 % by weight, the amount of Pt Carried is smaller and hence, the NO conversion rate is decreased. On the other hand, if the proportion b₁ of Pt is set in a range of b₁ > 11 % by weight, the NO conversion rate is varied only a little. Further, if the proportion e₁ of La or the like is smaller than 5 % by weight, there is no effect created by the fact that some La or the like is contained. On the other hand, if e₁ is > 25 % by weight, the amount of La-including CeO₂ is decreased and hence, the NO conversion is decreased, and the contribution to the purification is decreased, as compared with the case where the CeO₂ is contained along in the catalyst.

Various examples of the invention and comparative examples, as well as the processes used in making and testing them will now be described. First, the production of the modified ZSM-5 zeolite used in all the examples will be described.

### Production of modified ZSM-5 zeolite:

1. An unmodified ZSM-5 zeolite having a SiO₂/Al₂O₃ molar ratio of 42 was placed in a 5N solution of HCl at 90°C, and the resulting solution was agitated for 20 hours to provide a slurry-like matter.
2. Solids were separated from the slurry-like matter by filtering and washed with pure water, until the pH of the washing water reached a value equal to or larger than 4.
3. The solids were subjected to a drying treatment under conditions of 130°C for 5 hours and then to a calcining treatment at 400°C for 12 hours in the atmosphere, thereby providing a massive modified ZSM-5 zeolite.
4. The massive modified ZSM-5 zeolite was-subjected to a pulverising treatment to provide a powdery modified ZSM-5 zeolite. The SiO₂/Al₂O₃ molar ratio of this powdery modified ZSM-5 zeolite was 54 and hence, it can be seen that the dealuminization occurred. The heat-resistant tempetarure of the powdery modified ZSM-5 zeolite was 1,000°C.

### Example A:

In this example A, a catalyst will be described which contains, as a component, a Pt-Me carried modified ZSM-5 zeolite using Mg as the metal element Me.

### A. De-aluminization inhibiting effect of Mg

Magnesium (Mg) was carried on the modified ZSM-5 zeolite under utilization of an ion exchanging process as described below, thereby providing a Me-carried modified ZSM-5 zeolite.
(a) An aqueous solution of 6-hydrated magnesium nitrate [Mg(NO₃)•6H₂O] having a predetermined concentration was added in an amount of 400ml to the modified ZSM-5 zeolite of a predetermined incorporated weight to provide a mixture.
(b) Using an evaporator, water was removed from the mixture, thereby providing an Mg-carried modified ZSM-5 zeolite by the impregnating process.
(c) The Mg-carried modified ZSM-5 zeolite was subjected to a drying under conditions of 120°C and 3 hours in the atmosphere and then to a calcining treatment at 400°C for 12 hours in the atmosphere.

Table 1 shows the weight of incorporation of the modified ZSM-5 zeolite (corresponding to ZSM-5 shown in the Table) used in the production in examples 1 and 2 of the Mg-carried modified ZSM-5 zeolite, the concentration of the 6-hydrated magnesium nitrate (corresponding to Mg(NO₃)₂•6H₂O shown in the Table in the aqueous solution, and the proportion of Mg in the examples 1 and 2.

**Table 1**

| Mg-carried modified ZSM-5 zeolite | | Weight of ZSM-5 incorporated (g) | Concentration of Mg(NO₃)₂•6H₂O (g/liter) | Proportion of Mg (% by weight) |
|---|---|---|---|---|
| Example | 1 | 49.7 | 6.7 | 0.51 |
| | 2 | 49.5 | 13.5 | 1.05 |

Then, the examples 1 and 2 of the Mg-carried modified ZSM-5 zeolite and the modified ZSM-5 zeolite without Mg as a comparative example were subjected to MAS27Al-NMR measurement, thereby determining the proportion of Al within the skeleton.
The measuring conditions were as follows: the standard sample was an aqueous solution of 1 mole of aluminum chloride; the number of rotations of the sample was 6,000 rpm; the frequency of addiction was 200; the moderating time was 5 seconds; the spectrum treating conditions were T3 =20, T4 = 40 and BF = 100-

Then, the examples 1 and 2 and the comparative example were subjected two an aging treatment in which they were maintained for 20 hours in a gas atmosphere consisting of 10 % by weight of O₂, 10 % by weight of H₂O and the balance of N₂ at a temperature of 700°C, namely, they were exposed to a hydrothermal environment.
Thereafter, the proportion of Al within the skeleton of each of the examples 1 and 2 and the comparative example was determined in the same manner as described above.

Table 2 shows the proportion of Mg in the examples 1 and 2 and the comparative example, the proportions G and H of Al within the skeleton before and after the aging treatment, and the de-aluminization rate K [= (G - H) x G} x 100].

**Table 2**

| Mg-carried modified ZSM-5 zeolite | | Proportion of Mg (% by weight) | Proportion of Al within the skeleton (% by weight) | | de-aluminization rate K (%) |
|---|---|---|---|---|---|
| | | | G before aging treatment | H after aging treatment | |
| Example | 1 | 0.51 | 93.0 | 81.8 | 12.0 |
| | 2 | 1.05 | 96.0 | 86.4 | 10.0 |
| Comparative Example | | - | 95.1 | 47.9 | 49.6 |

As apparent from Table 2, the de-aluminization rates K of the examples 1 and 2 are remarkably lower that than of the comparative example. This is presumed to be due to the fact that magnesium entered pores in the examples 1 and 2 and acted with ion exchange sites which are Brönsted acid sites within the pores in the zeolite, i.e., with aluminum within the skeleton, thereby stabilizing the charge balance between Me-Al and the zeolite, and hence, the removal of aluminum was inhibited.

### B. Production of Pt-Mg carried modified ZSM-5 zeolite

1. 25 grams of platinum dinitrodiamine was dissolved in 1,000 ml of 25 % ammonia water by heating to provide a platinum solution (having a Pt concentration of 1.5 %).
2. 100 grams of the modified ZSM-5 zeolite was added to the platinum solution, and the resulting mixture was agitated at 90°C for 12 hours to cause Pt to be carried on the modified ZSM-5 zeolite by the ion exchange process.
3. After cooling, the Pt-carried modified ZSM-5 zeolite was separated by filtering and then washed with pure waster.
4. The Pt-carried modified ZSM-5 zeolite was subjected to a drying treatment at 120°C for 3 hours in the atmosphere and then to a calcining treatment at 400°C for 12 hours in the atmosphere. The proportion b₁ of Pt in the Pt-carried modified ZSM-5 zeolite was equal to 7.6 % by weight.
5. Magnesium was carried on the Pt-carried modified ZSM-5 zeolite by an impregnating process which will be described below, thereby providing a Pt-Mg-carried ZSM-5 zeolite.
   (a) An aqueous solution of 6-hydrated magnesium nitrate [Mg(NO₂)₂•6H₂O] having a predetermined concentration was added in an amount of 400 ml to the Pt-carried modified ZSM-5 zeolite having a predetermined incorporation weight to provide a mixture.
   (b) An evaporator was used to remove water from the mixture.
   (c) The mixture was subjected to a drying treatment at 120°C for 3 hours in the atmosphere and then to a calcining treatment at 400°C for 12 hours in the atmosphere.

Table 3 shows the weight of incorporation of the Pt-carried modified ZSM-5 zeolite used for the production of examples 1 to 5 of the Pt-Mg-carried modified ZSM-5 zeolite (corresponding to PtZSM-5 shown in Table 3), the concentration of the 6-hydrated magnesium nitrate (corresponding to Mg(NO₃)₂•6H₂O shown in Table 3) in the aqueous solution, and proportion c₁ of Mg in the examples 1 to 5.

**Table 3**

| Pt-Mg-carried Modified ZSM-5 zeolite | | Weight of PTZSM-5 incorporated (g) | Concentration of Mg(NO₃)₂•6H₂O (g/liter) | Proportion c₁ of Mg (% by weight) |
|---|---|---|---|---|
| Examples | 1 | 50.0 | 1.33 | 0.10 |
| | 2 | 49.8 | 6.60 | 0.52 |
| | 3 | 49.7 | 13.30 | 1.00 |
| | 4 | 50.0 | 20.15 | 1.50 |
| | 5 | 49.0 | 26.38 | 1.95 |

In addition, as another example, magnesium was carried on the Pt-carried modified ZSM-5 zeolite by utilizing an ion exchange process which will be described below, thereby providing a Pt-Mg-carried modified ZSM-5 zeolite.
(a) An aqueous solution of 6-hydrated magnesium nitrate [Mg(NO₃)₂•6H₂O] having a predetermined concentration was added in an amount of 400 ml to the Pt-carried modified ZSM-5 zeolite having a predetermined incorporation weight, and they were mixed together. Then, 25 % ammonia water was added to the mixture, so chat the pH of the mixture was regulated to 8. Thereafter, the mixture was heated to 90°C and agitated for 12 hours. Thus, a Pt-Mg-carried modified ZSM-5 zeolite was produced by the ion exchange process.
(b) After cooling, the Pt-Mg-carried modified ZSM-5 zeolite was separated by filtering and then washed with pure water.
(c) The Pt-Mg-carried modified ZSM-5 zeolite was subjected to a drying treatment at 120°C for 3 hours in the atmosphere and then to a calcining treatment at 400°C for 12 hours in the atmosphere.

Table 4 shows the weight of incorporation of the Pt-carried modified ZSM-5 zeolite used for the production of examples 6 to 8 of the Pt-Mg-carried modified ZSM-5 zeolite (corresponding to PtZSM-5 shown in Table 4), the concentration of the 6-hydrated magnesium nitrate (corresponding to Mg(NO₃)₂•6H₂O shown in Table 4) in the aqueous solution, and proportion c₁ of Mg in the examples 6 to 8.

**Table 4**

| Pt-Mg-carriad modified ZSM-5 zeolite | | Weight of PtZSM-5 incorporated (g) | Concentration of Mg(NO₃)₂•6H₂O (g/liter) | Proportion c₁ of Mg (% by weight) |
|---|---|---|---|---|
| Examples | 6 | 50.0 | 123.3 | 0.16 |
| | 7 | 50.0 | 246.6 | 0.18 |
| | 8 | 49.8 | 246.6 | 0.42 |

### C. Aging Treatment

The examples 1 to 8 of the PC-Mg carried modified ZSM-5 zeolite were subjected to an aging treatment under the same conditions.

### D. Production of catalyst

30 grams of the above-described example 1 of the Pt-Mg carried modified ZSM-5 zeolite resulting from the aging treatment, 60 grams of CeO₂ having an average diameter D of 78Å, 50 grams of 20 % silica sol, 180 grams of pure water and alumina balls were thrown into a pot, and they were subjected to a wet pulverization for 12 hours to prepare a slurry-like catalyst. In this case, the composition of the catalyst comprises 30 % by weight of the Pt-Mg carried modified ZSM-5 zeolite, 60 % by weight of CeO₂ and 10 % by weight of SiO₂. Therefore, the proportion A₁ of the Pt-Mg carried modified ZSM-5 zeolite is nearly equal to 33 % by weight (A₁ ∞ 33 % by weight). On the other hand, the proportion B₁ [= {B/ (A + B)} x 100] of the CeO₂ is nearly equal to 67 % by weight.

A 6 mil honeycomb support made of cordierite having a diameter of 25.5 mm, a length of 60 mm and 400 cells/in² was immersed into the slurry-like catalyst. Then, the honeycomb support was taken out from the slurry-like catalyst, and an excessive amount of the catalyst was removed by jetting of air. Thereafter, the honeycomb support was maintained under heating at 150°C for 1 hour to dry the slurry-like support and further it was subjected to a calcining treatment at 400°C for 12 hours in the atmosphere, thereby supporting the catalyst on the honeycomb support. In this case, the amount of catalyst retained on the honeycomb support was 150 g/liter. This catalyst is referred to as catalyst example 1.

Using the examples 2 to 8 of the above-described Pt-Mg carried modified ZSM-5 zeolite, catalyst examples 2 to 8 were produced in the same manner as described above.

For comparison, using a Pt-carried modified ZSM-5 zeolite resulting from an aging treatment similar to that described above in place of the Pt-Mg-carried modified ZSM-5 zeolite, a comparative example of catalyst was produced in the same manner as described above. The proportion of the Pt-carried modified ZSM-5 zeolite in this comparative example was about 33 % by weight, and the proportion of CeO₃ was about 67 % by weight.

### E. Test of purification of supposed exhaust gas

A test gas having a composition shown in Table 5 was prepared as a simulation gas in a case of an air-fuel ratio A/F = 24 that simulates the exahust gas during a low-load lean burn.

**Table 5**

| Component | Test gas A/F = 24 (% by volume) |
|---|---|
| CO₂ | 1.0 |
| H₂ | 0.03 |
| C₃H₆ | 0.12 |
| NO | 0.02 |
| CO | 0.1 |
| O₂ | 10.0 |
| H₂O | 10.0 |
| N₂ | balance |

In the purifying test, the catalyst of the example 1 was first placed in a fixed-bed flow reaction device. Then, the test gas was allowed to flow through the devise at a space velocity S.V. of 5 x 1.0⁴ h⁻¹, and at the same time, the temperature of the test gas was risen at a rising rate of 20°C/min to 500°C. The NO conversion rate by the catalyst of the example 1 during this time was measured. A similar purifying test was also carried out for the catalysts of the examples 2 to 8 and the comparative example.

Table 6 shows the proportion c₁ of Mg and the maximum NO conversion rate with regard to the catalysts of the examples 1 to 8 and the comparative example. In this case, the maximum NO conversion rate of each catalyst is provided at near a gas temperature of 250 °C. For example, for the example 6, the gas temperature was 265°C, and for the comparative example, the gas temperature was 240°C.

**Table 6**

| Catalyst | | Proportion c₁ of Mg (% by weight) | Maximum No conversion rate (%) |
|---|---|---|---|
| Example | 1 | 0.10 | 47.0 |
| | 2 | 0.52 | 49.6 |
| | 3 | 1.00 | 45.5 |
| | 4 | 1.50 | 42.1 |
| | 5 | 1.95 | 41.6 |
| | 6 | 0.16 | 49.1 |
| | 7 | 0.18 | 48.4 |
| | 8 | 0.42 | 47.6 |
| Comparative example | | - | 41.3 |

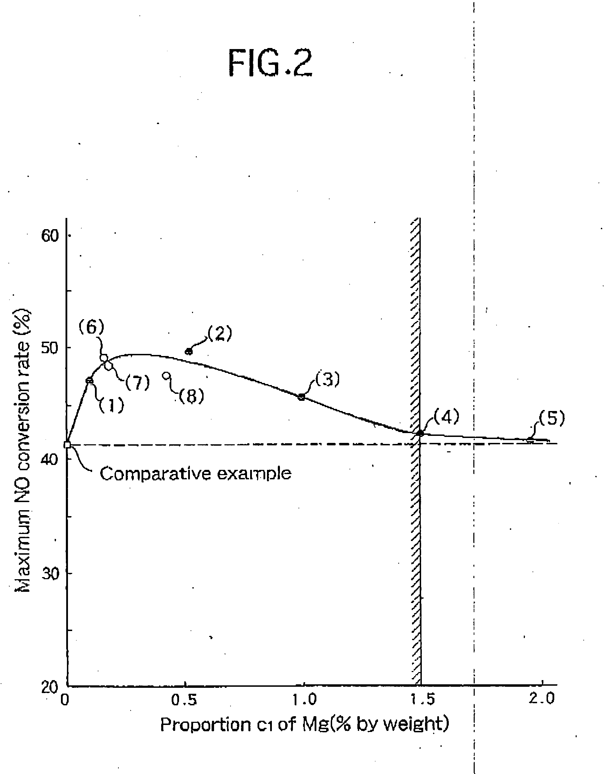

Fig.2 is a graph produced from the relationship between the proportion c₁ of Mg and the maximum NO conversion rate based on Table 6. In Fig.2, points (1) to (8) correspond to the examples 1 to 8, respectively.

As is apparent from Fig.2, if magnesium is carried on the Pt-carried modified ZSM zeolite as in examples 1 to 8, the maximum NO conversion rate can be enhanced in the excessive-oxygen atmosphere even after the aging treatment, more than that in the comparative example. The proportion c₁ of Mg in the catalyst is preferably in a range of c₁ s 1.5 % by weight.

### Example B:

In this example B, a catalyst will be described which includes, as a forming component, a Pt-Me-carried modified ZSM-5 zeolite, wherein Ca, Sr or Ba is used as the metal element Me.

### A. Production, of Pt-Me carried modified ZSM-5 zeolite

1. Carrying of Me
(a) An aqueous solution of Me nitrate having a predetermined concentration was added in an amount of 400 ml to and mixed with 50 grams of the modified ZSM-5 zeolite. Then, the mixture was heated to 90°C and agitated for 12 hours. Thus, a Me-carried modified ZSM-5 zeolite was produced by the ion exchange process.
(b) After cooling, the Me-carried modified ZSM-5 zeolite was separated by filtering and then washed with pure water.
(c) The Me-carried modified ZSM-5 zeolite was subjected to a drying treatment at 120°C for 3 hours in the atmosphere and then to a calcining treatment at 400°C for 12 hours in the atmosphere.

2. Carrying of Pt
(a) 12.5 grams of platinum dinitrodiamine was dissolved into 500 ml of 25 % ammonia water by heating to provide a Platinum solution (having a Pt concentration of 1.5 %).
(b) 50 grams of the Me-carried modified ZSM-5 zeolite was added to the platinum solution, and the mixture was agitated at 90°C for 12 hours. Thus, Pt was carried on the Me-carried modified ZSM-5 zeolite by the ion exchange process.
(c) After cooling, the Pt-Me-carried modified ZSM-5 zeolite was separated by filtering and then washed with pure water.
(d) The Pt-Me-carried modified ZSM-5 zeolite was subjected to a drying treatment at 120°C for 3 hours in the atmosphere and then to a calcining treatment at 400°C for 121 hours in the atmosphere.
Table 7 shows the type of nitrate used for carrying of the Me, the concentration of the nitrate in the aqueous solution, and the proportion c₁ of Me by weight for examples 1 to 3 of the Pt-Me-carried modified ZSM-5 zeolite. The proportion b₁ of Pt in each of the examples 1 to 3 is nearly equal to 7.6 % by weight, as in Example A.

**Table 7**

| PE-Ms-carried modified ZSM-5 | | Nitrate | | Proportion c₁ of Me |
|---|---|---|---|---|
| | | Type | Concentration (g/liter) | |
| Example | 1 | Ca(NO₃)₂•4H₂O | 227.1 | Ca:0.20 |
| | 2 | Sr(NO₃)₁•4H₂O | 203.5 | Sr.0.51 |
| | 3 | Ba(NO₃)₂•4H₂O | 125.7 | Ba:0.51 |

### B. Each of the examples 1 to 3 of the Pt-Me-darried modified ZSM-5 zeolite was subjected to an aging treatment under the same condition as those described above.

### C. Using examples 1 to 3 of Pt-me-carried modified ZSM-5 zeolite resulting from the aging treatment, examples 1 to 3 of catalyst were produced in the same process as that described in section D in Example A.

Then, the catalysts of the examples 1 to 3 were subjected to a purifying test in a method similar to that described in the section E in Example A.

Table 8 shows the type of metal element Me, the maximum NO conversion rate and the gas temperature at the time when the maximum NO conversion rate was obtained for the examples 1 to 3 and, as a comparative example, the catalyst shown in Table 6.

**Table 8**

| Catalyst | | Type of metal element Me | Maximum No conversion rate | Gas temperature |
|---|---|---|---|---|
| | | | (%) | (°C) |
| Example | 1 | Ca | 48.2 | 262 |
| | 2 | Sr | 47.9 | 258 |
| | 3 | Ba | 54.5 | 250 |
| Comparative Example | | | 41.3 | 240 |

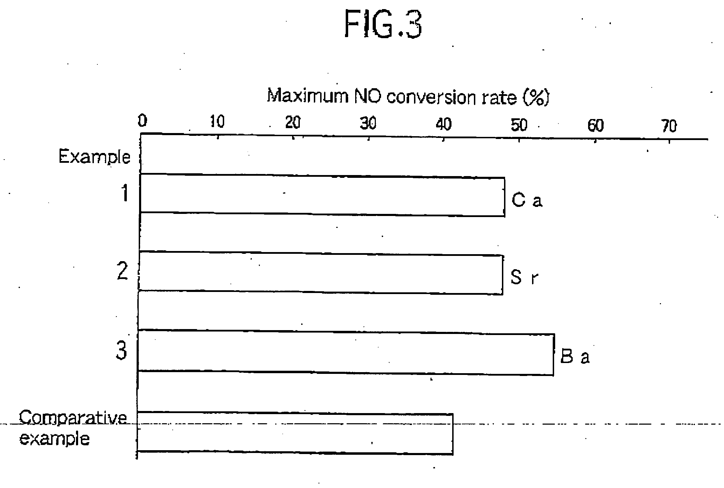

Fig.3 is a graph produced from the relationship between the catalysts of the examples 1 to 3 and the comparative example and the maximum NO conversion rate, based on Table 8.

As is apparent from Fig.3, if Ca, Sr or Ba is carried on the Pt-carried modified ZSM-5 zeolite as in examples 1 to 3, the maximum NO conversion rate can be enhanced in the excessive-oxygen atmosphere even after the aging treatment, more than that: with the catalyst as the comparative example. This is attributable to the fact that the removal of aluminum from the modified ZSM-5 zeolite was inhibited by Ca, Sr and Ba, as in the case where Mg was carried.

### Example C:

In this Example C, a catalyst will be described which is comprised of a Pt-carried modified ZSM-5 zeolite and CeO₂, including La or Ba.
A. Production of CeO₂ including La or Ba z
   1. La-including CeO₂
      (a) 31.2 grams of 6-hydrated lanthanum nitrate [La (NO₃)_{3•}6H₂O] was dissolved in 600 ml of pure water to prepare an aqueous solution.
      (b) 90.0 grams of CeO₃ (having an average diameter D of crystallites equal to 78Å) was suspended in the aqueous solution to provide a La-including CeO₂ mixture.
      (c) Using an evaporator, water was removed from the mixture.
      (d) The Ba-including CeO₂ mixture was subjected to a drying treatment at 120°C for 3 hours in the atmosphere and then to a calcining treatment at 600°C for 1 hour in the atmosphere The proportion e₁ of La in the La-including CeO₂ was equal to 10 % by weight
   2. Ba-including CeO₂
      (a) 19.0 gram of barium nitrate [Ba(NO₃)₂] was dissolved into 600 ml of pure water to prepare an aqueous solution.
      (b) 90.0 gram of CeO₂ (having an average diameter D of crystallites equal to 78) was suspended in the aqueous solution to provide a Ba-including CeO₂ mixture.
      (c) Using an evaporator, water was removed from the mixture.
      (d) The La-including CeO₂ mixture was subjected to a drying treatment at 120°C for 3 hours in the atmosphere and then to a calcining treatment at 600°C for 1 hours in the atmosphere. The proportion e₁ of Ba in the Ba-including CeO₂ was equal to 10 % by weight.
B. Using a Pt-carried modified ZSM-5 zeolite (proportion b₁ of Pt = 7.6 % by weight) resulting from the aging treatment and a La-including CeO₂ or Ba-including CeO₂, examples 1 and 2 of catalysts were produced in a process similar to that described in the section D in Example A. In the examples 1 and 2, the proportion E₁ of the Pt-carried modified ZSM-5 zeolite was nearly equal to 33 % by weight, while the proportions F₁ [= {F/(E + F)} x 100] of the La-including CeO₂ and the Ba-including CeO₁ were nearly equal to 67 % by weight, respectively.

Then, a purifying test was carried out for the catalysts of the examples 1 and 2 in a method similar to that described in the section E in Example A.

Table 9 shows the type of CeO₂, the maximum NO conversion rate and the gas temperature at the time when sich maximum NO conversion rate was obtained, for the catalysts as the examples 1 and 2 and the comparative example shown in Table 6.

**Table 9**

| Catalyst | | Type of CeO₂ | Maximum No conversion rate (%) | Gas temperature (°C) |
|---|---|---|---|---|
| Example | 1 | La-including CeO₂ | 43.7 | 260 |
| | 2 | Ba-including CeO₂ | 48.5 | 270 |
| Comparative Example | | CeO₂ | 41.3 | 240 |

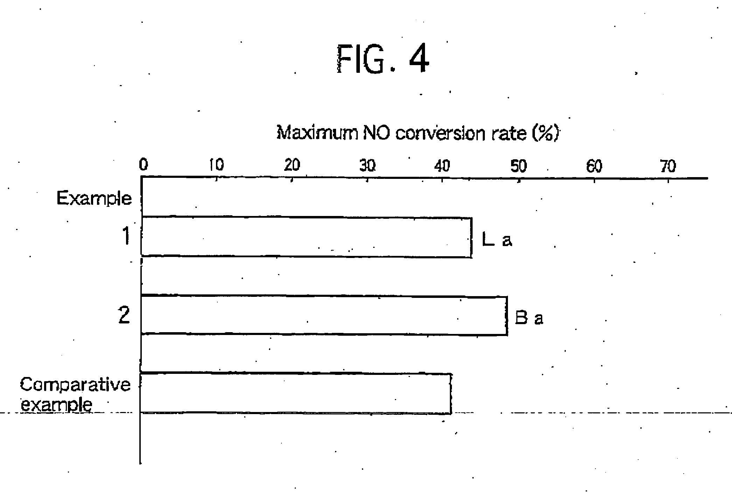

Fig. 4 is a graph produced from the relationship between catalysts as the examples 1 and 2 and the comparative example and the maximum NO conversion rate, based on Table 9.

As is apparent from Fig. 4, if La or Ba is carried on the CeO₂ as in the catalysts of the examples 1 and 2, the maximum NO conversion rate can be enhanced in the excessive-oxygen environment even after the aging treatment, more than that with the catalyst as the comparative example with no La or Ba carried thereon. This is attributable to an NO-adsorbing ability enhancing effect provided by the La-including or Ba-including CeO₂.

According to the present invention, it is possible to provide an exhaust emission control catalyst which is capable of exhibiting an excellent NOₓ converting ability in an excesive-oxygen atmosphere even after being exposed to a high-temperature environment including oxygen and water vapor by the above-described configuration of the catalyst.

## Claims

1. An exhaust emission control catalyst, for use with a lean-burn engine, comprising a crystalline aluminosilicate with a catalytic metal carried thereon, and CeO₂, **characterised in that** said CeO₂ is formed of grains of crystallites, said crystallites having an average diameter of less than 500Å, said crystalline aluminosilicate is a ZSM-5 zeolite which has undergone a dealuminization and which has a SiO₂/Al₂O₃ molar ratio of 25-800 after said dealuminization, and at least one of Mg, Ca, Sr and Ba has been impregnated on said crystalline aluminosilicate by an ion exchange process so as to inhibit the removal of aluminium from said crystalline aluminosilicate in a hydrothermal environment.

2. An exhaust emission control catalyst as claimed in claim 1, wherein the proportion by weight of said crystalline aluminosilicate with a catalytic metal impregnated thereon and at least one of said Mg, Ca, Sr and Ba to the total weight of the catalyst is in the range of 19% to 100%.

3. An exhaust emission control catalyst as claimed in claim 1, wherein the proportion by weight of at least one of said Mg, Ca, Sr and Ba to said crystalline aluminosilicate with a catalytic metal carried thereon is less than or equal to 10%.

## Patentansprüche

1. Katalysator zur Regelung der Abgasemission, zur Verwendung mit einem Magermotor, umfassend ein kristallines Alumosilikat mit einem darauf geträgerten katalytischen Metall, und CeO₂, **dadurch gekennzeichnet, dass** das CeO₂ aus Kristallitkörnern gebildet ist, wobei die Kristallite einen mittleren Durchmesser von weniger als 500 Å haben, wobei das kristalline Alumosilikat ein ZSM-5 Zeolith ist, das einer Dealuminierung unterzogen worden ist und das nach der Dealuminierung ein SiO₂/Al₂O₃-Molverhältnis von 25-800 aufweist, und mindestens eines von Mg, Ca, Sr und Ba durch ein lonenaustauschverfahren auf das kristalline Alumosilikat imprägniert worden ist, um die Entfernung von Aluminium aus dem kristallinen Alumosilikat in einer hydrothermalen Umgebung zu verhindern.

2. Katalysator zur Regelung der Abgasemission, wie in Anspruch 1 beansprucht, wobei der Gewichtsanteil des kristallinen Alumosilikats mit darauf imprägniertem katalytischen Metall und mindestens einem von dem Mg, Ca, Sr und Ba zum Gesamtgewicht des Katalysators im Bereich von 19% bis 100% ist.

3. Katalysator zur Regelung der Abgasemission, wie in Anspruch 1 beansprucht, wobei der Gewichtsanteil von mindestens einem von dem Mg, Ca, Sr und Ba zu dem kristallinen Alumosilikat mit einem darauf geträgerten katalytischen Metall weniger als oder gleich 10% ist.

## Revendications

1. Catalyseur pour contrôler les émissions de gaz d'échappement, destiné à être utilisé avec un moteur à combustion à mélange pauvre, comprenant un aluminosilicate cristallin sur lequel est supporté un métal catalytique, et du CeO₂, **caractérisé en ce que** ledit CeO₂ est formé de grains de cristallites, lesdits cristallites ayant un diamètre moyen de 500 Å, ledit aluminosilicate cristallin est une zéolite ZSM-5 qui a subi une dé-aluminisation et qui a un rapport molaire SiO₂/Al₂O₃ de 25 à 800 après ladite dé-aluminisation, et au moins l'un parmi Mg, Ca, Sr et Ba a été imprégné sur ledit aluminosilicate cristallin par un procédé d'échange d'ions de manière à inhiber l'élimination de l'aluminium dudit aluminosilicate cristallin dans un environnement hydrothermal.

2. Catalyseur pour contrôler les émissions de gaz d'échappement selon la revendication 1, dans lequel la proportion en poids dudit aluminosilicate cristallin sur lequel sont imprégnés un métal catalytique et d'au moins l'un parmi Mg, Ca, Sr et Ba, par rapport au poids total du catalyseur est dans la plage de 19 % à 100 %.

3. Catalyseur pour contrôler les émissions de gaz d'échappement selon la revendication 1, dans lequel la proportion en poids d'au moins l'un parmi lesdits Mg, Ca, Sr et Ba par rapport audit aluminosilicate cristallin sur lequel est supporté un métal catalytique est inférieure ou égale à 10 %.
